Europäisches Patentamt

European Patent Office

Office européen des brevets

(19)

(11) Veröffentlichungsnummer: **0 274 662 B1**

(12) **EUROPÄISCHE PATENTSCHRIFT**

(45) Veröffentlichungstag der Patentschrift: 08.05.91

(51) Int. Cl.⁵: **B44D 3/18**, C08J 7/04, B05D 7/04, B41M 1/30

(21) Anmeldenummer: 87118088.1

(22) Anmeldetag: 08.12.87

(54) Zeichenmaterial.

(30) Priorität: 16.12.86 DE 3642847

(43) Veröffentlichungstag der Anmeldung:
20.07.88 Patentblatt 88/29

(45) Bekanntmachung des Hinweises auf die
Patenterteilung:
08.05.91 Patentblatt 91/19

(84) Benannte Vertragsstaaten:
BE CH DE FR GB IT LI NL

(56) Entgegenhaltungen:
EP-A- 0 087 688
JP-A-58 078 761

(73) Patentinhaber: HOECHST AKTIENGESELL-
SCHAFT
Postfach 80 03 20
W-6230 Frankfurt am Main 80(DE)

(72) Erfinder: Thoese, Klaus, Dr. Dipl.-Chem.
Erbsenarker 15
W-6200 Wiesbaden(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Zeichenmaterial aus einem transparenten Schichtträger, der auf einer oder beiden Seiten mit einer Polyvinylalkohol und übliche Zusätze enthaltenden hydrophilen Schicht versehen ist.

Es ist bekannt (EP-A 0 125 113) hydrophobe Schichtträger mit Schichten auszustatten, die sie zur Aufnahme von Tinten befähigen. Hierzu verwendet man Beschichtungen, die aus Mischungen von Polyvinylpyrrolidon und einer hiermit verträglichen Komponente bestehen. Hierzu gehört auch Polyvinylalkohol.

Es ist auch ein Aufzeichnungsmedium bekannt (DE-A-33 30 420), das aus einem beschichteten Substrat besteht, dessen Beschichtung aus Partikeln eines Füllmittels in einem hydrophilen Bindemittel wie Polyvinylalkohol besteht.

Beschichtete, transparente Träger zur Ink-Jet-Bebilderung sind auch aus US-PS 4,575,465 bekannt. Dort verwendet man als Schicht Mischungen aus Polyvinylalkohol und Vinylpyridin-Vinylbenzyl-Copolymere in Form der quarternären Salze.

Schließlich ist bekannt entsprechende Zeichenmaterialien herzustellen (Jap-A- 59/222 381), bei denen die Beschichtung des transparenten Trägers aus einer Polyvinylalkohol enthaltenden Doppelschicht besteht.

Auch Mischungen aus Polyester und Polyvinylalkohol wurden als Overcoat bereits für Ink-Jet-Materialien beschrieben (Jap-A- 60/046 289).

Die bekannten Materialien eignen sich für wäßrige Tinten der Ink-Jet-Drucke. Es hat sich jedoch gezeigt, daß sie dann nicht geeignet sind, wenn sie für wäßrige Tinten von Faserschreibern, die man in Bebilderungs- oder Zeichengeräten verwendet, eingesetzt werden sollen.

Entweder nehmen die bekannten Materialien die Tinte nicht an oder sie bleibt nicht wischfest auf der Oberfläche haften. Die Schichten sind oft auch in Wasser so leicht löslich, daß beim Hantieren auf der Oberfläche nicht entfernbare Fingerprints entstehen.

Es war deshalb Aufgabe der vorliegenden Erfindung ein Zeichenmaterial, insbesondere zur Verwendung auf Plottern zu schaffen, das mit einer Beschichtung ausgerüstet ist, die so hydrophil ist, daß es Tinte aus Pen-Plottern oder ähnlichen Einrichtungen gut annimmt und daß die Tinten auf dem Material schnell und wischfest trocknen. Ferner war Aufgabe der Erfindung ein Material zu schaffen, das eine Beschichtung besitzt, die in Wasser soweit unlöslich ist, daß sich keine permanenten Fingerprints auf der Oberfläche bilden können.

Diese Aufgabe wird durch ein Zeichenmaterial gelöst, wie es in Anspruch 1 beschrieben ist. Vorzugsweise enthält die erfindungsgemäße hydrophile Schicht 30 bis 70 Gewichtsprozent Polyvinylalkohol und 70 bis 30 Gewichtsprozent, jeweils bezogen auf deren Gesamtgewicht, an Sulfonatgruppen tragenden Polyester, wobei ein Gewichtsverhältnis von etwa 1 : 1 ganz besonders bevorzugt ist.

Hierdurch wird erreicht, daß man ein Zeichenmaterial zur Verfügung stellen kann, dessen transparenter Schichtträger eine transparente, kratzbeständige, gegebenenfalls antistatisch ausgerüstete Beschichtung trägt, das zur Beschriftung mit Faserschreibern, die wäßrige Tinten enthalten sehr geeignet ist und das die Tinte schnell und wischbeständig aufnimmt.

Als Schichtträger werden Polyesterfolien verwendet, die bekanntlich gute mechanisch, thermische und optische Eigenschaften besitzen und chemisch inert sind. Sie bilden zum Beispiel eine gute Unterlage für wärmestabile Overhead-Folien und andere Anwendungen, bei denen man klare Folien als Schichtträger benötigt. Bevorzugt werden als Schichtträger biaxial verstreckte und thermisch fixierte Folien aus Polyethylenterephthalat verwendet.

Die Polyesterfolie als Schichtträger ist in der Regel mit einer Haftschicht versehen.

Haftschichten sind zum Beispiel aus folgenden Patentschriften bekannt: DE-PS 16 94 534, entsprechend US-PS 3,720,539, DE-PS 12 28 414, entsprechend US-PS 3,396,046, DE-PS 16 29 480, entsprechend GB-PS 1,127,076, oder DE-PS 25 55 783, entsprechend US-PS 4,139,506.

Auf der mit Haftschicht versehenen Polyesterfolie wird dann aus einer in Wasser als Lösungsmittel enthaltenden Lösung eine Schicht aus den erfindungsgemäßen Bestandteilen gebildet, die in der Kombination von Polyvinylalkohol und einem Sulfonatgruppen tragenden Mischpolyester besteht, wobei letzterer in Wasser dispergiert werden kann.

Die erfindungsgemäß einsetzbaren Mischpolyester sind an sich bekannt aus DE-AS 18 16 163, entsprechend US-PS 3,734,874, DE-PS 28 13 014, entsprechend US-PS 4,252,885 oder US-PS 3,563,942. Es handelt sich im wesentlichen um in Wasser lösliche oder dispergierbare Polyester, die man durch Umsetzung von aliphatischen, cycloaliphatischen oder aromatischen Dicarbonsäuren mit aliphatischen, cycloaliphatischen oder aromatischen Diolen erhält, wobei die veresterbaren Dicarbonsäuren oder Diole mit jeweils einem an einem aromatischen Ring befindlichen $-SO_3$ M-Rest, wobei M ein Wasserstoff- oder Metallion darstellt, versehen sind. Ihre Verwendung ist dabei auf Schlichtemittel, Leime, Aufschmelzklebstoffe, Folien und Filme gerichtet.

Es war nicht zu erwarten, daß diese Mischpolyester enthaltenden Beschichtungen zusammen mit Polyvinylalkoholen sich zu ausgezeichnet wäßrige Tinten annehmenden Schichten verarbeiten lassen, wo doch die Mischpolyester selbst Oberflächen liefern, auf denen Tinte nicht gut angenommen wird.

Als Polyvinylalkohole werden erfindungsgemäß Sorten verwendet, die in Wasser gut löslich sind. Hierzu gehören insbesondere solche, die einen Restacetylgehalt von unter 50, vorzugsweise unter 25 Molprozent besitzen.

Die Dicke der aufgebrachten hydrophilen Schicht liegt im Bereich von etwa 0,5 bis 10 $\mu$m. In Abhängigkeit von der Verwendung werden unterschiedliche Dickenbereiche bevorzugt. So wird man für die Verwendung als Zeichenmaterial eine Dicke im Bereich von etwa 2 bis 4 $\mu$m bevorzugen während man bei der Verwendung in Kombination mit lichtempfindlichen Materialien eine Dicke zwischen 5 und 10 $\mu$m vorzieht.

Die hydrophile Schicht für das erfindungsgemäße Zeichenmaterial enthält vorzugsweise Vernetzer. Geeignete Vernetzungsmittel sind vorzugsweise von Harnstoff oder Melamin abgeleitete teilweise oder ganz veretherte, handelsübliche Formaldehydverbindungen. Es können aber zum Beispiel auch Polyanhydride oder Titan-und/oder Zirkon enthaltende Verbindungen sein, die Polyvinylalkohole vernetzen können. Ein zu großer Gehalt an Vernetzer kann die Tintentrocknungszeit unzulässig verlängern. Der Gehalt an Vernetzer sollte deshalb im allgemeinen einen Gehalt in der getrockneten Schicht von 5 Gewichtsprozent nicht übersteigen. In der bevorzugten Ausführungsform enthält die hydropohile Schicht etwa 0,5 bis 3 Gewichtsprozent Vernetzer, bezogen auf das Trockengewicht der hydrophilen Schicht.

Bei Verwendung von Vernetzern auf Basis von Formaldehydharzen ist es notwendig, daß Säure zugegen ist. Hierzu eignen sich beispielsweise Citronensäure oder p-Toluolsulfonsäure.

Als weitere übliche Zusätze können in der hydrophilen Schicht Schlupfmittel anwesend sein. Erfindungsgemäß können nur sehr feinteilige unlösliche Stoffe verwendet werden, um die Projektionsfähigkeit der Overhead-Materialien nicht zu beeinträchtigen.

Weiterhin können in der hydrophilen Schicht Netzmittel, nichtionischer oder ionischer Art, Antistatika und andere Hilfsmittel, die zum Beispiel auch färbenden Charakter haben, zugegen sein, um spezielle Effekte zu erzielen.

Als wirksame Netz- und gleichzeitig antistatisch wirkende Mittel haben sich von Aminosäure abgeleitete Substanzen erwiesen. Besondere Bedeutung haben dabei Derivate des Sarkosins. Es können aber auch andere geeignete Antistatika und/oder Netzmittel eingesetzt werden, sofern sie mit den Bestandteilen der hydrophilen Schicht in Wasser verträglich sind.

Die erfindungsgemäßen Zeichenmaterialien lassen sich in der hydrophilen Schicht auch sensibilisieren z.B. mit wäßrigen Lösungen von lichtempfindlichen Substanzen. So sind sie beispielsweise zur Herstellung von Ein- oder Zweikomponenten Diazotypiematerialien geeignet.

Die folgenden Beispiele dienen der näheren Erläuterung der Erfindung. In den Beispielen werden folgende Chemikalien verwendet:

Sulfonatgruppen tragende Mischpolyester:

| Bezeichnung | $T_g$ °C | Molekular-gewicht | Hydroxyl-zahl | Säurezahl |
|---|---|---|---|---|
| AQ 29[+] | 29 | 14 000 | 6,0 | 2 |
| AQ 38[+] | 38 | 18 000 | 5,0 | 2 |
| AQ 55[+] | 55 | 18 000 | 5,3 | 2 |

[+] Polymersiate der EASTMAN KODAK

Die AQ-Polymeren sind als Dispersionen (D-Typen) oder in fester Form (S-Typen) erhältlich.

Polyvinylalkohole:

| Bezeichnung Typ | Viskosität einer 4 %igen Lösung bei 20°C (mPas) | Hydrolyse-grad (Mol-%) | Restacetyl-gehalt (Gewicht %) |
|---|---|---|---|
| I | 18 | ca. 88 | ca. 11 |
| II | 10 | ca. 74 | ca. 21 |
| III | 4 | ca. 88 | ca. 11 |
| IV | 4 | ca. 98 | ca. 2 |
| V | 10 | ca. 98 | ca. 2 |
| VI | 66 | ca. 99,7 | ca. 0,4 |

Ethylenoxidaddukt Fixegal® N von der Chemischen Fabrik GRÜNAU

Das Produkt enthält den Wirkstoff in Lösungsmittel. Es ist ein Ethylenoxidaddukt auf Basis eines Amins. Die Konzentration an Farbstoff beträgt ca. 58 Gewichtsprozent. In der Lieferform ist die Dichte 1,042 und der pH-Wert 7,0 bis 7,5.

In ähnlicher Weise wirksame Produkte sind feste Ethylenoxidaddukte von Fettalkoholen oder substituierten Phenolen.

Teilverethertes Melamin-Formaldehydharz MW (MADURIT® MW 815 der CASSELLA). Es liegt 75 %ig gelöst in Wasser vor, hat eine Viskosität von 300 bis 500 mPas und einen pH-wert von 8 ± 0,5.

Ve_rethertes Melamin-Formaldehydharz MF (MAPRENAL MF 900 der HOECHST AG). Konzentration 96 %.Verdünnbar mit Waser. pH-Wert 9,0 - 10. Dichte in Lieferform ca. 1,2. Jodfarbzahl nach DIN 6162 6,5.

Beispiel 1

Als transparenter Schichtträger diente eine 125 µm dicke Folie aus Polyethylenterephthalat, die bei ihrer Herstellung biaxial verstreckt und hitzefixiert worden war. Sie war auf einer Seite mit einer Polyvinylidenchlorid enthaltenden Haftschicht versehen, wie sie in der DE-PS 25 55 783 (entsprechend US-PS 4,139,506) beschrieben ist.

Auf die Oberfläche mit Haftvermittler wurden aus 10 %igen Lösungen in entionisiertem Wasser verschiedene Mischungen aufgebracht. Sie enthielten einen Sulfonatgruppen tragenden Mischpolyester (AQ-Polymer 29 S der EASTMAN KODAK) und Polyvinylalkohol Typ I (wie vorbeschrieben) in verschiedenen Mengenverhältnissen. Die Lösungen wurden mit einer Rakel dosiert und etwa 1 Minute bei 120 °C in einem Umluft-Trockenschrank zu etwa 2 µm dicken Schichten getrocknet.

Es wurden folgende Prüfungen durchgeführt:

A) Schichthaftung auf dem Schichtträger

Mit einem Gitterschnittprüfer Typ GS 30 nach DIN 53 151 wurde in die zu prüfende Schicht ein Kreuzschnitt geritzt. Anschließend wurde ein Klebestreifen (Tesaband 104 farblos der Firma BEIERSDORF) mit einem Scherengriff fest auf die verletzte Oberfläche gepreßt und ruckartig wieder abgerissen.

B) Wasserfestigkeit der hydrophilen Schicht

Ein Tropfen Wasser wurde mit dem Finger verrieben und die Veränderung der Schicht nass und später nach Trocknung bei Zimmertemperatur beobachtet.

C) Tintentrocknung

Mit einem Farbsatz wäßriger Tinten in Pens von einem Plotter wurden mit der Hand fünf parallele Linien von etwa 15 cm Länge gezogen. Es wurde die Zeit bis zur Wischfestigkeit der Linien festgestellt (Sekunden).

D) Prüfung des Farbumschlages

Mit einer braunen, wäßrigen Tinte, die zu einem Farbumschlag nach grün neigte, wenn die Linien längere Zeit bei Raumbedingungen lagerten, wurden Striche gezogen und nach 24 Stunden der Farbumschlag beobachtet.

Die Ergebnisse sind in der Tabelle 1 eingetragen. Bedeutung der in der Tabelle verwendeten Zeichen:

| Wertung | Waserfestigkeit oder Haftung der Schicht | Farbumschlag |
|---|---|---|
| + <br> + 0 <br> 0 + <br> 0 | gut <br> fast gut <br> mittel <br> schlecht | kein <br> gering <br> deutlich <br> total |

## Tabelle 1

| Polyvinyl-alkoholanteil (%) | A | B | C | D |
|---|---|---|---|---|
| 0 | + | + | 30 | 0 |
| 10 | + | + | 30 | 0 |
| 20 | + | + 0 | 1 - 2 | 0 |
| 30 | + | + 0 | 1 | 0 |
| 40 | + 0 | + 0 | 1 | 0 |
| 50 | 0 + | + 0 | 1 | + 0 |
| 60 | 0 + | + 0 | 1 | + 0 |
| 70 | 0 + | + 0 | 1 | + |
| 80 | 0 + | 0 + | 1 | + |
| 90 | 0 | 0 + | 1 | + |
| 100 | 0 | 0 + | 1 | + |

Beispiel 2

Es wurde nach Beispiel 1 verfahren. Polyvinylalkohol Typ I wurde aber jeweils in drei Mischungsverhältnissen mit den Sulfonatgruppen enthaltenden Mischpolyestern AQ 29 (1), AQ 38 (2) und AQ 55 (3) der EASTMAN KODAK kombiniert. Weiterhin sind zusätzlich die Ergebnisse für die Mischpolyester allein in Tabelle 2 mit eingetragen.

## Tabelle 2

| Misch-polyester | Misch-polyester (%) | A | B | C | D |
|---|---|---|---|---|---|
| 1 | 30 | 0 + | + 0 | 1 | + |
| | 50 | 0 + | + 0 | 1 | + 0 |
| | 70 | + | + 0 | 1 | 0 |
| | 100 | + | + | 30 | 0 |
| 2 | 30 | + 0 | + 0 | 1 | + |
| | 50 | 0 + | + 0 | 1 | + 0 |
| | 70 | + | + 0 | 30 | 0 |
| | 100 | + | + | 30 | 0 |
| 3 | 30 | + 0 | + 0 | 1 | + |
| | 50 | 0 + | + 0 | 1 | + 0 |
| | 70 | + | + 0 | 5 | 0 + |
| | 100 | + | + | 30 | 0 |

Beispiel 3

Auf den in Beispiel 1 angegebenen Schichtträger wurden die in Tabelle 3 aufgeführten Kombinationen als Lösung mit einer Rakel so angetragen, daß sich nach Trocknung innerhalb von 3 Minuten bei 120 °C etwa 2 bis 3 µm dicke hydrophile Schichten ergaben. In allen Fällen wurde der Mischpolyester (1) und verschiedene Polyvinylalkohole (Typ I bis VI) wie vorbeschrieben im Verhältnis 1 : 1 eingesetzt.

## Tabelle 3

| Polyvinyl-<br>alkohol | A | B | C$^+$ | D |
|---|---|---|---|---|
| I | + | + 0 | + 0 | + |
| II | + | + 0 | + | + |
| III | + | + 0 | 0 + | + |
| IV | + | 0 + | + 0 | + 0 |
| V | + | + 0 | + 0 | 0 |
| VI | + | 0 + | 0 + | 0 + |

Die Tintentrocknung wurde hier in anderer Weise als vorher beschrieben ausgeführt. Bei Methode C$^+$ wurde mit einem breiten Faserschreiber für Handbeschriftung Marke "Schwan Stabilo M schwarz" auf Trocknung geprüft. Das Ergebnis der Tinten-Trocknung ist folgendermaßen gekennzeichnet:

| | |
|---|---|
| sehr schnell | + |
| schnell | + 0 |
| langsam | 0 + |
| sehr langsam | 0 |

Beispiel 4

100 g einer 10 %igen Lösung aus 70 Teilen Mischpolyester AQ 29 und 30 Teilen Polyvinylalkohol Typ I (wie vorbeschrieben) wurden verschiedene Mengen des vorbeschriebenen Ethylenoxidadduktes N auf Basis eines Amins zur verhinderung Ges Farbumschlages zugesetzt.

Die Lösungen wurden 2 Minuten bei 120° C in einem Umluft-Trockenschrank zu etwa 2 bis 3 $\mu$m dicken Schichten getrocknet. Als Schichtträger diente die in Beispiel 1 bechriebene Polyesterfolie. Die Ergebnisse sind in Tabelle 4 zusammengefaßt.

## Tabelle 4

| Zusatz (g) | A | C | D |
|---|---|---|---|
| 0 | + 0 | 2 | 0 + |
| 0,5 | + | 5 | + 0 |
| 1,0 | + | 1-2 | + |

Beispiel 5

Auf die in Beispiel 1 angegebenen Schichtträger wurden Lösungen angetragen und in 5 Minuten bei 120 °C zu etwa 1 - 2 $\mu$m dicken hydrophilen Schichten getrocknet, die auf dem Schichtträger vorzüglich hafteten.

Die Ausgangslösung hatte folgende Zusammensetzung:

```
150    g Mischpolyester AQ 29 (10 %ig)
150    g Polyvinylalkohol Typ I (10 %ig)
 18    g Suspension aus feinteiligem Aluminiumsilikat
         (5 %ig) in Wasser, 5 Stunden in einer Kugel-
         mühle gemahlen
4,5 g neutralisiertes Palmkernfettsäuresarkosid
         (40 %ig als Netzmittel und Antistatikum)
```

Diese Lösung wurde mit 5 %iger Zitronensäure auf einen pH-Wert von 3,6 eingestellt.

Zu je 50 g Ausgangslösung wurden als Vernetzer entweder Hexamethoxymethylmelamin (5 %ig in Sprit/Wasser 1 : 1) als $V_I$ dargestellt oder teilverethertes Melamin-Formaldehyd-harz MW (5 %ig in Wasser) -$V_{II}$- in verschiedenen Mengen zugesetzt.

Tabelle 5 gibt die angewendeten Kombinationen und die Eigenschaften der Schichten an.

## Tabelle 5

| Vernetzungs-mittel in der Schicht (%) | Wasserfestig-keit der Schicht (B) | Tinten-trocknung (C)+ | Farbum-schlag (D) | Oberflächen-widerstand (Ohm) |
|---|---|---|---|---|
| ohne | + 0 bis 0 + | + | 0 | $2,6 \times 10^{11}$ |
| $V_I$ | | | | |
| 1 | + bis + 0 | + 0 | + | $4,0 \times 10^{11}$ |
| 3 | + bis + 0 | + 0 | + | $1,1 \times 10^{12}$ |
| 5 | + bis + 0 | + 0 | + bis + 0 | $3,6 \times 10^{12}$ |
| $V_{II}$ | | | | |
| 1 | + | + 0 | + | $4,6 \times 10^{11}$ |
| 3 | + | + 0 bis 0 + | + | $7,0 \times 10^{11}$ |
| 5 | + bis + 0 | + 0 | + | $1,0 \times 10^{12}$ |

Der Oberflächenwiderstand diente als Maß für die antistatische Ausrüstung der hydrophilen Schicht. Sie wurde an den Schichten nach 24 stündiger Konditionierung bei 23 °C und 50 % relativer Feuchte geprüft.

Die Messung erfolgte mit einer Federzugelektrode (Anordnung A) nach DIN 53 482 bzw. VDE 0303, Teil 3 und 100 Volt Meßspannung. Antistatisch ausgerüstete Materialien sollen einen Oberflächenwiderstand deutlich kleiner als $10^3$ Ohm haben.

Beispiel 6

Aus Beispiel 5 wurde die Lösung mit 5% Hexamethoxymethylmelamin zusätzlich mit soviel Ethylenoxiddadukt N versetzt, daß der Gehalt an dieser Substanz in der Schicht 5 % betrug. Schichten von etwa 2 μm Dicke wurden durch Trocknung von 3 Minuten bei 120 °C auf folgenden Polyesterfolien-Schichtträgern mit unterschiedlichen Haftschichten erzeugt:

| Dicke der<br>Polyesterfolie<br>(μm) | Haftschicht nach<br>DE-PS |
|---|---|
| 125 | 25 55 783 |
| 50 | 16 94 534 (PVAL-Typ) |
| 75 | 16 94 534 (PVDC-Typ) |
| 75 | 12 28 414 |
| 100 | 16 29 480 (PVDC-Typ) |

Die Haftung der Schichten wurde nach Beispiel 1 geprüft. Sie war auf allen Schichtträgern ausgezeichnet.

Beispiel 7

Auf die in Beispiel 1 verwendeten Schichtträger wurden Lösungen angetragen und in 3 Minuten bei 120° C zu etwa 2 - 3 μm dicken hydrophilen Schichten mit ausgezeichneter Haftung auf dem Schichtträger getrocknet.

Die Ausgangslösung hatte folgende Zusammensetzung:

| | | |
|---|---|---|
| 270 | g | Mischpolyester AQ 29 (10 %ig) |
| 270 | g | Polyvinylalkohol Typ I (10%ig) |
| 2,7 | g | Ethylenoxidaddukt N |
| 4 | ml | p-Toluolsulfonsäure |

Der pH-Wert der Lösung mit einer Claselektrode gemessen, betrug 3,9.

Zu je 50 g dieser Ausgangslösung wurden als Vernetzer neben den zwei in Beispiel 5 aufgeführten Produkten zusätzlich auch das Melaminformaldehydharz MF (5 %ig in Wasser) -V$_{III}$- verwendet. Tabelle 6 gibt die angewendeten Kombinationen und die Eigenschaften der Schichten an.

## Tabelle 6

| Vernetzungs-<br>mittel in der<br>Schicht (%) | Wasserfestig-<br>keit der<br>Schicht (B) | Tinten-<br>trocknung<br>(C) | Farbum-<br>schlag<br>(D) |
|---|---|---|---|
| ohne | 0 + | + 0 | + |
| $V_I$<br>1<br>3<br>5 | + bis + 0<br>+<br>+ | +<br>+ bis + 0<br>+ 0 | +<br>+<br>+ |
| $V_{II}$<br>1<br>3<br>5 | +<br>+<br>+ | +<br>+<br>+ | +<br>+<br>+ |
| $V_{III}$<br>1<br>3<br>5 | +<br>+<br>+ | + bis + 0<br>+ bis + 0<br>+ 0 | +<br>+<br>+ |

Beispiel 8

Als Schichtträger diente die in Beispiel 1 beschriebene Polyesterfolie mit Haftvermittler. Auf einer Beschichtungsmaschine wurde bei 120° C folgende Lösung angetragen und in etwa 1 Minute zu etwa einer 2 - 3 µm dicken Schicht getrocknet.

```
1000    g  Polyvinylalkohol Typ I (5 %ig)
1000    g  Mischpolyester-Dispersion AQ 29 (5 %ig)
   5    g  Polyethylenoxidaddukt N
  60    g  Aluminiumsilikat-Dispersion in Wasser
           (5 %ig)
  20    g  Zitronensäure (10 %ig)
  20    g  Hexamethoxymethylmelamin $-V_I-$ (5 %ig in
           Sprit/Wasser 1 : 1)
```

Der pH-Wert der Lösung betrug 3,3. Die Eigenschaften der erfindungsgemäßen Beschichtung wurden mit denen zweier Polyesterfolien verglichen, die Beschichtungen aus Polyvinylalkohol bzw. Polyvinylpyrrolidon trugen.

Neben den Prüfungen aus den vorangegangenen Beispielen wurden die Materialien noch auf einem Pen-Plotter mit folgenden farbigen Tinten beschriftet:

Wäßrige Tinten

32 HP 03 KS von STAEDTLER
mit den Farben schwarz, rot, blau, grün,
braun

W 1676 CAD PEN von FABER CASTELL
mit den Farben schwarz, rot, blau, grün,
braun

Lösungsmitteltinten

31 HP 03 KS von STAEDTLER
mit den Farben schwarz, rot, orange,
violettblau, gelb

Die hergestellten beschrifteten Folien wurden projiziert und die Qualität der Bilder beurteilt.

Weiterhin wurden die Beschichtungen von Hand mit den wäßrigen Zeichentuschen F und FL von ROTRING bezeichnet und die Haftung der Tuschen mit Klebeband ermittelt. An den Tuschelinien wurde weiterhin die Tuscheannahme und die Randschärfe beobachtet und wie folgt bewertet:

+ gut + 0 fast gut0 + mittel0 schlecht

Die Zusammenstellung der Ergebnisse enthält Tabelle 7.

## Tabelle 7

| Eigenschaft | | Folie nach Beispiel 8 | Folie m. Polyvinylalkohol | Folie m. Polyvinylpyrrolidon |
|---|---|---|---|---|
| Schichtdicke (μm) | | 2 - 3 | ca. 2 | 1 - 2 |
| Schichthaftung | | + 0 | + 0 | 0 |
| Wasserfestigkeit | | + 0 | 0 | 0 + |
| Fingerprints | | abwischbar | n. abwischbar | n. abwischbar |
| Oberflächenwiderstand (Ohm) | | $2 \cdot 10^{13}$ | $8{,}0 \cdot 10^{13}$ | $1{,}2 \cdot 10^{13}$ |
| Tintentrocknung (Sekunden) | | 6 | 4 | 5 |

Beschriftbarkeit mit Tinten von Pen-Plottern

| 32 HP wäßrig | Randschärfe | gut | schlecht | gut |
|---|---|---|---|---|
| | Flächendeckung | gut | schlecht | gut |
| W 1676 wäßrig | Randschärfe | gut | schlecht | gut |
| | Flächendeckung | gut | gut | fast gut |
| 31 HP | Breitlaufen der Linien | gut | gut | gut |
| Lösungsmittel | Gesamteindruck | gut | gut | gut |

Beschriftbarkeit mit Zeichentusche F/FL

| Tusche – Haftung | +0/+ | 0/0 | 0/0 |
|---|---|---|---|
| Tusche – Annahme | +0/+ | 0+/0+ | 0+/0+ |
| Tusche – Randschärfe | + /+ | 0+/0+ | 0+/0+ |

Beispiel 9

Als Schichtträger diente eine wie in Beispiel 1 beschriebene Polyesterfolie mit Haftvermittlern. Auf einer Beschichtungsmaschine wurde folgende Lösung angetragen und in etwa 1 Minute bei 120°C zu einer 3 μm dicken Schicht getrocknet:

| 1000 | g | Polyvinylalkohol Typ I (5 %ig) |
| 1000 | g | Mischpolyester-Dispersion AQ 29 (5 %ig) |
| 5 | g | Polyethylenoxidaddukt N |
| 60 | g | Aluminiumsilikat-Dispersion in Wasser (5 %ig) |
| 20 | g | Zitronensäure (10 %ig) |
| 40 | g | Hexamethoxymethylmelamin (5 %ig in Sprit/Wasser 1 : 1) |

Der pH-Wert der Lösung betrug 3,3. Zur Herstellung eines Einkomponentendiazotypie-Materials für die Halbfeuchtentwicklung wurde die hydrophile Schicht auf der glasklaren Polyesterfolie mit folgender Lösung beschichtet, mit einer Rakel dosiert und in einem Trockenschrank bei 100° C ca. 2 Minuten getrocknet:

| 90 ml | Wasser |
| 10 ml | Isopropanol |
| 1 g | Netzmittel |
| 1 g | Zitronensäure |
| 6 g | Naphthalin-1,3,6-trisulfonsäure (Na-Salz) |
| 4 g | 4-Diazo-1-tolylmercapto-2,5-diethoxybenzol-1/2 $ZnCl_2$ |

Das so erhaltene Diazotypie-Material wurde unter einer Vorlage bildmäßig belichtet und an einem Feuchtentwicklungsgerät mit einem handelsüblichen Halbfeuchtentwickler entwickelt.

Es wurde eine glasklare Folie mit neutralschwarzen Linien auf farblosem Grund erhalten.

Beispiel 10

Die Herstellung einer hydrophilen Schicht wurde wie in Beispiel 9 beschrieben ausgeführt. Anstelle von 20 g Citronensäure 10 %ig enthielt die Lösung zu ihrer Herstellung jedoch 7,5 g p-Toluolsulfonsäure 10 %ig. Der pH-Wert betrug 4,1.

Zur Erzeugung eines Zweikomponentendiazotypie-Materials für die Trockenentwicklung wurde die hydrophile Schicht mit folgender Lösung ausgerüstet und anschließend getrocknet:

```
10   ml  Wasser
 5   ml  Isopropanol
 4   g   Zitronensäure
 4   g   Thioharnstoff
 0,5 g   Saponin
 4   g   Zinkchlorid
 2,5 g   Dioxynaphthalin-6-sulfosäure (Na-Salz)
 1   g   4-Diazo-dimethylanilin-ZnCl₂
```

Das so erhaltene Diazotypie-Material wurde in einem handelsüblichen Lichtpausgerät unter einer Vorlage bildmäßig belichtet und mit feuchtem Ammoniakgas entwickelt.
Man erhielt eine glasklare Folie mit blauen Linien auf farblosem Grund.

**Ansprüche**

1. Zeichenmaterial aus einem transparenten Schichtträger, der auf einer oder beiden Seiten mit einer Polyvinylalkohol und übliche Zusätze enthaltenden, hydrophilen Schicht versehen ist, dadurch gekennzeichnet, daß die hydrophile Schicht Sulfonatgruppen tragenden Mischpolyester enthält.

2. Material nach Anspruch 1, dadurch gekennzeichnet, daß die hydrophile Schicht 30 bis 70 Gewichtsprozent Polyvinylalkohol und 70 bis 30 Gewichtsprozent Mischpolyester, jeweils bezogen auf deren Gesamtgewicht, enthält.

3. Material nach Anspruch 1 oder 2, dadurch gekennzeichnet, daß die hydrophile Schicht Polyvinylalkohol und Mischpolyester im Gewichtsverhältnis von 1 : 1 enthält.

4. Material nach Anspruch 1 bis 3, dadurch gekennzeichnet, daß die hydrophile Schicht etwa 0,5 bis 10 μm dick ist.

5. Material nach Anspruch 4, dadurch gekennzeichnet, daß die hydrophile Schicht etwa 2 bis 4 μm dick ist.

6. Material nach Anspruch 1, dadurch gekennzeichnet, daß der Schichtträger eine Polyesterfolie darstellt.

7. Material nach Anspruch 6, dadurch gekennzeichnet, daß der Schichtträger eine biaxial verstreckte und thermisch fixierte Folie aus Polyethylenterephthalat darstellt.

8. Material nach Anspruch 1, dadurch gekennzeichnet, daß die hydrophile Schicht Vernetzer enthält.

9. Material nach Anspruch 8, dadurch gekennzeichnet, daß die hydrophile Schicht als Vernetzer eine von Harnstoff oder Melamin abgeleitete Formaldehydverbindung enthält.

10. Material nach Anspruch 9, dadurch gekennzeichnet, daß die hydrophile Schicht etwa 0,5 bis 3 Gewichtsprozent, bezogen auf Trockengewicht der Schicht, Vernetzer enthält.

11. Material nach Anspruch 1, dadurch gekennzeichnet, daß die hydrophile Schicht an sich bekannte lichtempfindliche Diazoniumverbindungen in Verbindung mit Stabilisatoren und gegebenenfalls Kupplungskomponenten enthält.

12. Material nach Anspruch 1, dadurch gekennzeichnet, daß der Schichtträger ein oder beidseitig mit einer

EP 0 274 662 B1

an sich bekannten Haftschicht versehen ist.

## Claims

1. A drafting material comprising a transparent base material which on one or both surfaces is provided with a hydrophilic coating containing polyvinyl alcohol and usual additives, characterised in that said hydrophilic coating includes a sulfonate group-containing copolyester.

2. The material as claimed in claim 1, characterised in that the hydrophilic layer comprises 30 to 70 percent by weight of polyvinyl alcohol and 70 to 30 percent by weight of copolyester, each time related to the total weight thereof.

3. The material as claimed in claim 1 or 2, characterised in that the weight ratio of polyvinyl alcohol to copolyester in the hydrophylic coating is 1:1.

4. The material as claimed in any of claims 1 to 3, characterised in that the hydrophilic coating has a thickness of about 0.5 to 10 $\mu$m.

5. The material as claimed in claim 4, characterised in that the hydrophilic coating has a thickness of about 2 to 4 $\mu$m.

6. The material as claimed in claim 1, characterised in that the base material comprises a polyester film.

7. The material as claimed in claim 6, characterised in that the base material is a biaxially stretched and heat-set polyethylene terephthalate film.

8. The material as claimed in claim 1, characterised in that a crosslinking agent is contained in the hydrophilic coating.

9. The material as claimed in claim 8, characterised in that the crosslinking agent contained in the hydrophilic coating is formaldehyde compound derived from urea or melamine.

10. The material as claimed in claim 9, characterised in that the hydrophilic coating comprises about 0.5 to 3 percent by weight, relative to the dry weight of the coating, of crosslinking agent.

11. The material as claimed in claim 1, characterised in that photosensitive diazonium compounds, which are known per se, are contained in the hydrophilic coating, in combination with stabilizers and, if appropriate, coupling agents.

12. The material as claimed in claim 1, characterised in that one or both surfaces of the base material are provided with an adhesion-promoting layer, which is known per se.

## Revendications

1. Matériau à dessiner à base d'un support de couche transparent pourvu, sur une ou deux faces, d'une couche hydrophile renfermant du poly(alcool vinylique) et des additifs usuels, caractérisé en ce que la couche hydrophile contient un copollyester porteur de groupes sulfonate.

2. Matériau selon la revendication 1, caractérisé en ce que la couche hydrophile renferme de 30 à 70 % en poids de poly(alcool vinylique) et de 70 à 30 % en poids de copolyester, chaque fois par rapport à son poids total.

3. Matériau selon les revendications 1 ou 2, caractérisé en ce que la couche hydrophile renferme le poly-(alcool vinylique) et le copolyester dans un rapport pondéral 1: 1.

4. Matériau selon l'une des revendications 1 à 3, caractérisé en ce que la couche hydrophile a une

17

épaisseur d'environ 0,5 à 10 $\mu$m.

5. Matériau selon la revendication 4, caractérisé en ce que la couche hydrophile a une épaisseur d'environ 2 à 4 $\mu$m.

6. Matériau selon la revendication 1, caractérisé en ce que le support de couche est une feuille de polyester.

7. Matériau selon la revendication 6, caractérisé en ce que le support de couche est une feuille de poly-(téréphtalate d'éthylène) étirée biaxialement et thermofixée.

8. Matériau selon la revendication 1, caractérisé en ce que la couche hydrophile contient des agents de réticulation.

9. Matériau selon la revendication 8, caractérisé en ce que la couche hydrophile contient, comme agent de réticulation, un composé formaldéhydique dérivé de l'urée ou de la mélamine.

10. Matériau selon la revendication 9, caractérisé en ce que la couche hydrophile renferme environ 0,5 à 3% en poids d'agent de réticulation, par rapport au poids sec de la couche.

11. Matériau selon la revendication 1, caractérisé en ce que la couche hydrophile contient des composés de diazonium photosensibles, connus en soi, en association avec des stabilisants et éventuellement des copulants.

12. Matériau selon la revendication 1, caractérisé en ce que le support de couche est pourvu, sur une ou deux de ses faces, d'une couche d'adhérence connue en soi.